(19) Europäisches Patentamt
European Patent Office
Office européen des brevets

(11) **EP 2 169 508 B1**

(12) **FASCICULE DE BREVET EUROPEEN**

(45) Date de publication et mention
de la délivrance du brevet:
**02.11.2016 Bulletin 2016/44**

(21) Numéro de dépôt: **09305898.0**

(22) Date de dépôt: **25.09.2009**

(51) Int Cl.:
*F41G 7/34* (2006.01)   *F41G 7/36* (2006.01)
*G05D 1/10* (2006.01)

(54) **Système de guidage d'un projectile**

Geschosssteuerungssystem

Projectile guiding system

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **30.09.2008 FR 0805366**

(43) Date de publication de la demande:
**31.03.2010 Bulletin 2010/13**

(73) Titulaire: **MBDA France**
**75016 Paris (FR)**

(72) Inventeurs:
• **Guibout, Vincent**
**75116, Paris (FR)**
• **Larcher, Eric**
**92250, La Garenne-Colombes (FR)**

(74) Mandataire: **Gevers & Orès**
**41 avenue de Friedland**
**75008 Paris (FR)**

(56) Documents cités:
**US-A- 5 435 503      US-B1- 6 456 906
US-B1- 6 573 486**

**Description**

La présente invention concerne un système de guidage d'un projectile, par exemple de type obus ou roquette, sans aide satellitaire, ainsi qu'un projectile pourvu d'un tel système de guidage.

Le document US6573486 propose un système de guidage d'un projectile comportant un récepteur GPS et des accéléromètres.

On sait que, en l'absence d'aide satellitaire (par exemple de type GPS), la fonction de navigation d'un projectile est tout d'abord mise en oeuvre lors d'une phase d'initialisation qui consiste à déterminer l'attitude et la position du projectile à un instant initial. Cette phase d'initialisation est ensuite suivie d'une phase de propagation qui consiste à déterminer la position et l'attitude du projectile au cours du vol à l'aide d'instruments de mesure embarqués au sein du projectile (par exemple des accéléromètres, des gyromètres, des magnétomètres, ...).

Or, dans le cas d'un projectile tiré depuis un canon, les instruments de mesure embarqués sont indisponibles durant le coup de canon à cause des accélérations latérales et axiales très importantes (qui saturent la centrale inertielle du projectile) et de l'environnement du canon (notamment la présence de masses ferromagnétiques qui rend inutilisables les magnétomètres du projectile). Par conséquent, l'initialisation de la fonction de navigation ne peut être effectuée, l'attitude complète du projectile restant alors indéterminée à la sortie de la bouche du canon.

Pour pallier cette absence de mesure durant le coup de canon, il est connu de déterminer la vitesse aérodynamique du projectile à partir de la trajectoire de référence à la sortie du coup de canon. Cependant, une telle détermination est très approximative, car la trajectoire réelle du projectile diffère de la trajectoire de référence, ce qui rend très difficile une navigation précise du projectile.

Il est également connu d'estimer, au cours du vol, l'attitude du projectile à l'aide des magnétomètres embarqués par mesure du champ magnétique terrestre. Cependant, la précision des mesures réalisées reste limitée et aucune information sur la vitesse aérodynamique du projectile n'est par ailleurs disponible.

De plus, pour un projectile supposé très stable et équipé de gyromètres et d'accéléromètres, il est connu de mesurer la gravité avec ces instruments de mesure embarqués pour estimer l'attitude et la vitesse aérodynamique du projectile durant une phase de vol balistique. Cependant, une telle estimation de la vitesse aérodynamique peut uniquement être effectuée lors de la phase de vol balistique du projectile. En outre, l'estimation d'attitude est fortement dégradée par toute prise d'incidence du projectile (par exemple à cause du vent).

Par ailleurs, lorsque les instruments de mesure embarqués à bord du projectile sont de qualité moyenne ou médiocre, l'imprécision sur l'estimation de l'attitude du projectile rend la navigation du projectile très mauvaise sur une durée de vol importante.

La présente invention a pour objet de remédier à ces inconvénients et notamment de déterminer, avec une grande précision, l'attitude et la vitesse aérodynamique du projectile en vol, notamment lors de la phase de vol balistique et de la phase de vol guidé-piloté.

A cette fin, selon l'invention, le système de guidage d'un projectile équipé d'au moins un actionneur de pilotage (une surface aérodynamique mobile, un impulseur, ...) et comportant des moyens de mesure de paramètres physiques, un calculateur de guidage et des moyens de commande dudit actionneur de pilotage, ledit projectile devant suivre une trajectoire de référence dans les premiers instants de vol et ledit calculateur de guidage comportant :

- des moyens de navigation pour déterminer l'attitude et la position du projectile en vol ;
- des moyens de guidage pour élaborer des ordres de guidage à partir de l'attitude, de la position et de la position du but déterminées par lesdits moyens de navigation ; et
- des moyens de pilotage pour établir des ordres de commande, destinés auxdits moyens de commande, à partir desdits ordres de guidage, est remarquable en ce que ledit calculateur de guidage comporte en outre des moyens d'estimation aptes à estimer, au cours du vol, l'attitude et la vitesse aérodynamique du projectile, ainsi que les variations de la vitesse du vent, à partir desdits ordres de guidage, de ladite trajectoire de référence et desdites mesures obtenues par lesdits moyens de mesure, en utilisant un modèle de comportement dynamique du projectile et un modèle de la dynamique du vent.

Ainsi, les moyens d'estimation du calculateur de guidage de l'invention permettent, sans information préalable (notamment sur la position et l'attitude du projectile) et avec une grande précision, l'estimation de l'attitude et de la vitesse aérodynamique du projectile, des variations de la vitesse du vent ainsi que de n'importe quel paramètre des moyens de mesure.

En outre, ces estimations sont réalisées tout au long du vol du projectile (phase de vol balistique, phase de vol guidé-piloté, ...) et peuvent permettre d'augmenter notamment la précision à l'impact ainsi que la portée du projectile.

Par ailleurs, bien que le système de guidage de l'invention ne requière pas d'aide satellitaire, il peut être couplé à des moyens de navigation par satellite, par exemple de type GPS.

Avantageusement, lesdits moyens d'estimation comportent des moyens de pilotage équivalents (c'est-à-dire réalisés par un modèle dynamique des moyens de pilotage) pour déterminer, à partir desdits ordres de guidage élaborés par lesdits moyens de guidage, des ordres de commande équivalents auxdits ordres de commande établis par lesdits moyens de pilotage.

En outre, avantageusement, ces moyens de pilotage équivalents comportent :

- un premier comparateur, relié à la sortie desdits moyens d'estimation et à la sortie desdits moyens de guidage ;
- un premier gain, relié à la sortie dudit premier comparateur ;
- un intégrateur, relié à la sortie dudit premier gain ;
- un second comparateur, relié à la sortie dudit intégrateur et à la sortie desdits moyens d'estimation ; et
- un second gain, relié à la sortie dudit second comparateur.

Selon une caractéristique de l'invention, le vent est modélisé par un bruit blanc filtré par un filtre d'un ordre convenable (par exemple du deuxième ou troisième ordre) au sein dudit modèle de la dynamique du vent.

Avantageusement, lesdits moyens d'estimation sont constitués par un filtre de Kalman étendu.

En outre, lesdits moyens de navigation comportent de préférence au moins :

- ■ des premiers moyens d'intégration, reliés auxdits moyens de mesure, aptes à déterminer l'attitude et la position du projectile à partir de mesures obtenues par lesdits moyens de mesure ;
- ■ des deuxièmes moyens d'intégration, reliés auxdits moyens de mesure et auxdits moyens d'estimation, aptes à déterminer l'attitude et la position du projectile à partir des mesure desdits moyens de mesure et de l'attitude estimée par lesdits moyens d'estimation ;
- ■ des troisièmes moyens d'intégration, reliés auxdits moyens d'estimation, aptes à déterminer l'attitude et la position du projectile à partir de l'estimation de l'attitude et de la vitesse aérodynamique du projectile ainsi que des variations de la vitesse du vent ; et
- ■ des quatrièmes moyens d'intégration aptes à déterminer l'attitude et la position du projectile à partir de ladite trajectoire de référence ; ainsi que des moyens de supervision, reliés auxdits premiers, deuxièmes, troisièmes et quatrièmes moyens d'intégration, pour sélectionner, en fonction d'un critère de sélection, un desdits moyens d'intégration, de sorte que lesdits moyens de navigation soient aptes à délivrer l'attitude et la position du projectile déterminées par lesdits moyens d'intégration sélectionnés.

Avantageusement, lesdits moyens de mesure comportent trois gyromètres, trois accéléromètres et deux magnétomètres.

La présente invention concerne également un système de guidage tel que spécifié précédemment.

Les figures du dessin annexé feront bien comprendre comment l'invention peut être réalisée. Sur ces figures, des références identiques désignent des éléments semblables.

La figure 1 représente schématiquement, sous forme synoptique, un mode de mise en oeuvre de la présente l'invention.

Les figures 2 à 5 illustrent les schémas synoptiques respectivement du calculateur de guidage, du filtre de Kalman étendu, des moyens de pilotage équivalents appartenant au filtre de Kalman étendu et des moyens de navigation, conformes au mode de mise en oeuvre de la présente invention.

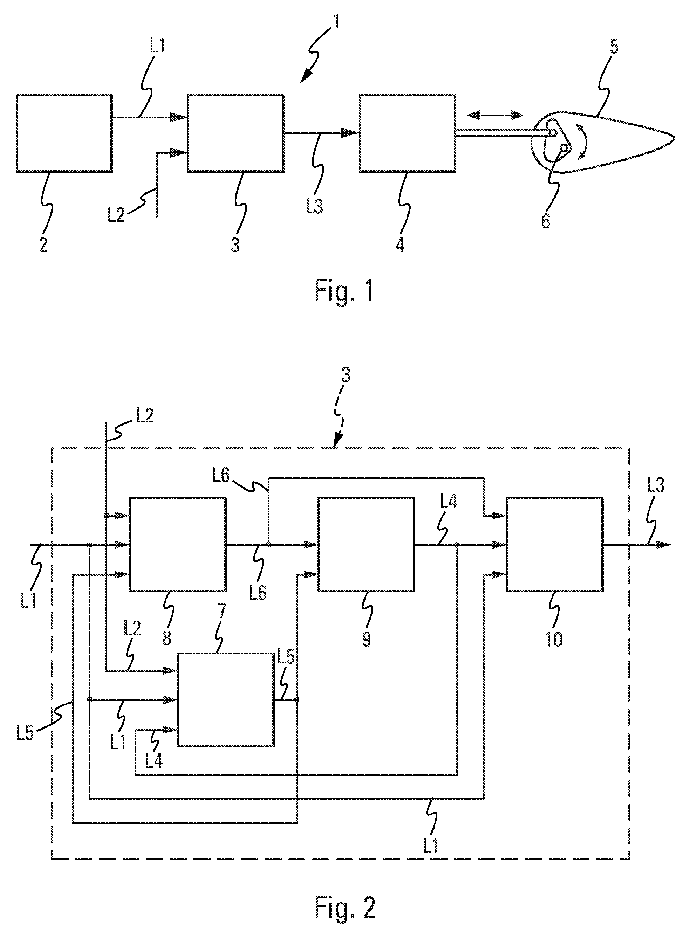

Comme le montre le schéma synoptique de la figure 1, le système de guidage 1 sans aide satellitaire d'un projectile (non représenté), tiré depuis un canon, comporte :

- des moyens de mesure 2 embarqués à bord du projectile qui délivrent en sortie, par la liaison L1, des mesures de paramètres physiques. Ces moyens de mesure 2 comprennent par exemple trois gyromètres, trois accéléromètres et deux magnétomètres ;
- un calculateur de guidage 3, recevant les mesures obtenues par les moyens de mesure 2 (liaison L1) et, par la liaison L2, une trajectoire de référence associée au vol du projectile. Le calculateur de guidage 3 est apte à délivrer en sortie, par la liaison L3, des ordres de commande transmis à des moyens de commande 4 détaillés ci-dessous ;
- des moyens de commande 4 qui reçoivent lesdits ordres de commande (liaison L3). Ces moyens de commande 4 sont aptes à braquer des actionneurs de pilotage 5. Sur la figure 1, on a illustré, à titre d'exemple illustratif, les actionneurs de pilotage 5 par des surfaces aérodynamiques mobiles 5 (par exemple des gouvernes canard) du projectile autour de leur axe de rotation 6.

Plus particulièrement, selon l'invention et comme l'illustre l'exemple de schéma synoptique de la figure 2, le calculateur de guidage 3 du système de pilotage 1 comprend :

- un filtre de Kalman étendu 7, auquel est associé un vecteur d'états X et qui reçoit les mesures obtenues par les moyens de mesure 2 (liaison L1), la trajectoire de référence (liaison L2) ainsi que des ordres de guidage délivrés en sortie par des moyens de guidage 9 (détaillés ci-après), par la liaison L4. A partir de ces informations, en utilisant un modèle de comportement dynamique du projectile et un modèle de la dynamique du vent (détaillés par la suite), le filtre de Kalman 7 est apte à délivrer en sortie, par la liaison L5, une estimation de l'attitude et de la vitesse aérodynamique du projectile, des variations de la vitesse du vent, du vecteur rotation instantanée ainsi que de n'importe quel paramètre associé aux moyens de mesure 2, tout au long du vol du projectile. A partir de ces estimations, on peut déduire la vitesse cinématique du projectile ;
- des moyens de navigation 8, qui reçoivent les mesures des moyens de mesure 2 (liaison L1), la trajectoire de référence (liaison L2) ainsi que des estimations du filtre de Kalman étendu 7 (liaison L5). Les moyens de navigation 8 sont aptes à délivrer en sortie, par la liaison L6, la position et l'attitude du projectile tout au long du vol ;
- des moyens de guidage 9, qui reçoivent l'attitude et la position du projectile (liaison L6) ainsi que des estimations du filtre de Kalman étendu 7 (liaison L5). Les moyens de guidage 9 sont aptes à délivrer en sortie (liaison L4) des ordres de guidage selon une loi de guidage mettant en oeuvre, par exemple, une navigation proportionnelle avec un biais qui permet une compensation et un formage de la trajectoire;
- et des moyens de pilotage 10, qui reçoivent les mesures obtenues par les moyens de mesure 2 (liaison L1), les ordres de guidage des moyens de guidage 9 (liaison L4), ainsi que l'attitude et la position du projectile délivrées par les moyens de navigation 8 (liaison L6). Les moyens de pilotage 10 sont aptes à délivrer en sortie (liaison L3) les ordres de commande transmis aux moyens de commande 4 des surfaces aérodynamiques mobiles 5.

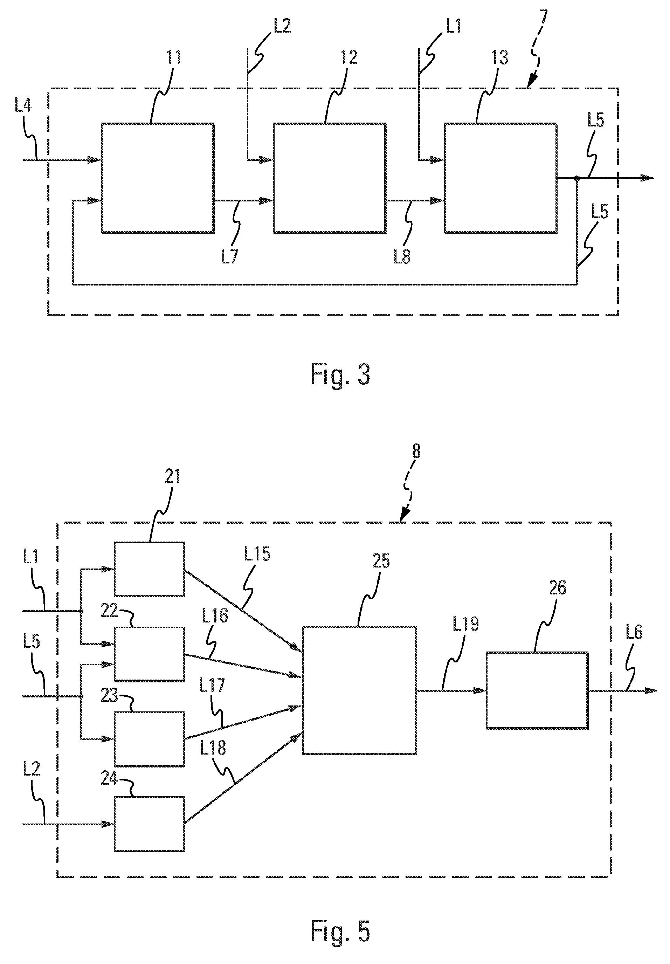

Sur la figure 3, on a représenté un exemple de schéma synoptique du filtre de Kalman étendu 7 conforme au mode de réalisation de l'invention.

Ce filtre de Kalman étendu 7 comprend :

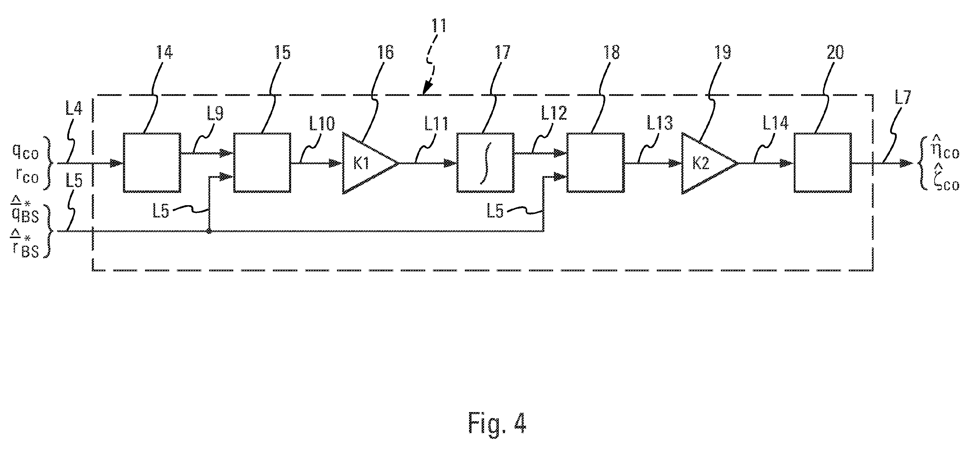

- des moyens de pilotage équivalents 11 (ci-après décrits en relation avec la figure 4), qui reçoivent en entrée (liaison L4) les ordres de guidage établis par les moyens de guidage 9 et des estimations du vecteur d'états X (associé au filtre de Kalman 7) délivrées par des moyens de recalage 13 (ci-après décrits), par la liaison L5. Les moyens de pilotage équivalents 11 sont aptes à délivrer en sortie, par la liaison L7, des ordres de commande équivalents aux ordres de commande élaborés par les moyens de pilotage 10 ;
- des moyens de calcul 12, qui reçoivent la trajectoire de référence (liaison L2) ainsi que les ordres de commande équivalents (liaison L7) transmis par les moyens de pilotage équivalents 11. A partir des équations associées à la dynamique du filtre de Kalman (détaillées par la suite), les moyens de calcul 12 sont aptes à délivrer des estimations non recalées du vecteur d'états X ; et
- des moyens de recalage 13, qui reçoivent les mesures obtenues par les moyens de mesure 2 (liaison L1) ainsi que les estimations non recalées transmises par les moyens de calcul 12. Les moyens de recalage sont aptes à recaler les estimations non recalées à partir des mesures obtenues (liaison L1) de manière à délivrer en sortie (liaison L5) des estimations recalées du vecteur d'états X associé au filtre de Kalman 7.

Le vol du projectile peut par exemple se décomposer selon les trois phases de vol successives suivantes :

- une première phase de vol initial, qui débute immédiatement après le coup de canon, durant laquelle les moyens de mesure 2 sont indisponibles (accélérations axiales et latérales trop importantes, perturbation du champ magnétique à l'intérieur du canon) ;
- une seconde phase de vol balistique au cours de laquelle le projectile n'est soumis qu'à l'action de la pesanteur. Les moyens de mesure 2 sont désormais aptes à effectuer des mesures ; et
- une troisième phase de vol guidé-piloté durant laquelle les gouvernes canard 5 du projectile sont déployées. Le projectile est alors soumis, en plus de la pesanteur, à l'action des gouvernes canard 5.

Durant la phase de vol initial, la détermination de l'attitude et de la vitesse aérodynamique du projectile est effectuée de façon connue à partir de la trajectoire de référence, aucune mesure n'étant disponible.

Lors de la phase de vol balistique, les moyens de mesure 2 sont utilisables et le filtre de Kalman étendu 7 est initialisé.

Pour pouvoir estimer l'attitude du projectile, le filtre de Kalman étendu 7 utilise les équations de la mécanique du vol et notamment l'action de la gravité : sa direction fournit la verticale, tandis que son amplitude fournit l'angle de tangage du projectile.

Pour observer la gravité, il est nécessaire d'écrire les équations de la mécanique du vol faisant intervenir cette dernière. En supposant que le projectile est en autorotation, il est judicieux de travailler dans le repère démodulé associé au projectile comportant des axes déduits des axes $(Xe, Ye, Ze)$ liés au projectile, par démodulation de l'intégrale de vitesse de roulis, notée $\varphi^*$.

On a alors les relations suivantes :

$$\varphi^*(t) = \int_{\tau=0}^{\tau=t} p(\tau)d\tau$$

$$\overline{u}_a = u_a$$

$$\overline{v}_a = v_a \cos(\varphi^*) - w_a \sin(\varphi^*)$$

$$\overline{w}_a = v_a \sin(\varphi^*) + w_a \cos(\varphi^*)$$

$$\overline{p} = p$$

$$\overline{q} = q \cos(\varphi^*) - r \sin(\varphi^*)$$

$$\overline{r} = q \sin(\varphi^*) + r \cos(\varphi^*)$$

où :

- $(u_a, v_a, w_a)$ sont les composantes du vecteur vitesse aérodynamique selon les axes du repère (Xe,Ye,Ze) associé au projectile, avec Xe l'axe longitudinal et Ye et Ze les axes transverses figés au moment du tir tels que (Xe,Ye,Ze) est un repère orthonormé direct ;
- $(\overline{u}_a, \overline{v}_a, \overline{w}_a)$ sont les composantes du vecteur vitesse aérodynamique selon les axes du repère démodulé de $\varphi^*$ associé au projectile ;
- $(p,q,r)$ sont les composantes du vecteur rotation instantanée selon les axes du repère associé au projectile ; et
- $(\overline{p},\overline{q},\overline{r})$ sont les composantes du vecteur rotation instantanée selon les axes du repère démodulé de $\varphi^*$ associé au projectile.

Dans le repère démodulé de $\varphi^*$ associé au projectile, les équations de force s'écrivent :

$$\dot{u}_a = -g \sin(\theta) + \Gamma_x + \overline{r}\overline{v}_a - \overline{q}\overline{w}_a - \dot{u}_v$$

$$\dot{v}_a = g \sin(\theta) \sin(\varphi - \varphi^*) + QS_{ref}\overline{C}_y(V_a, \overline{\beta}_a) - u_a\overline{r} - \dot{v}_v$$

$$\dot{w}_a = g \cos(\theta) \cos(\varphi - \varphi^*) + QS_{ref}\overline{C}_z(V_a, \overline{\alpha}_a) + u_a\overline{q} - \dot{w}_v$$

où :

- la notation « ˙ » correspond à la dérivée par rapport au temps ;
- $(\psi,\theta,\varphi)$ sont les trois angles d'Euler qui représentent respectivement l'angle de lacet, l'angle de tangage et l'angle de roulis associés au projectile faisant passer du trièdre géographique local au projectile, au repère du projectile

(Xe,Ye,Ze) ;
- ($\overline{\alpha}_a$, $\overline{\beta}_a$) représentent respectivement l'incidence et le dérapage aérodynamique dans le repère démodulé de $\varphi^*$ associé au projectile tels que :

$$\left(\overline{\alpha}_a, \overline{\beta}_a\right) = \left(\arctan\left(\overline{w}_a / \overline{u}_a\right), \arcsin\left(\overline{v}_a / \sqrt{\overline{u}_a^{\,2} + \overline{v}_a^{\,2} + \overline{w}_a^{\,2}}\right)\right)$$

- $\Gamma_x$ est l'accélération axiale suivant l'axe longitudinal du projectile ; et
- ($u_v$, $v_v$, $w_v$) sont les composantes du vecteur de vitesse du vent dans le repère démodulé de $\varphi^*$ associé au projectile.

En supposant le vent horizontal, si ($W_x$,$W_y$,0) représentent les composantes du vent dans le repère inertiel direct (Xo,Yo,Zo) (Xo représentant l'axe suivant la droite canon-cible et Zo représentant la verticale orientée vers le bas), alors on a :

$$\begin{pmatrix} \dot{u}_v \\ \dot{v}_v \\ \dot{w}_v \end{pmatrix} = T_{R_0 \to R} \begin{pmatrix} \dot{W}_x \\ \dot{W}_y \\ 0 \end{pmatrix} - \begin{pmatrix} p \\ q \\ r \end{pmatrix} \wedge \begin{pmatrix} u_v \\ v_v \\ w_v \end{pmatrix}$$

avec

$$T_{R_0 \to R} = \begin{pmatrix} \cos(\psi)\cos(\theta) & \sin(\psi)\cos(\theta) & -\sin(\theta) \\ \cos(\psi)\sin(\theta)\sin(\varphi) - \sin(\psi)\cos(\varphi) & \sin(\psi)\sin(\theta)\sin(\varphi) + \cos(\psi)\cos(\varphi) & \cos(\theta)\sin(\varphi) \\ \cos(\psi)\sin(\theta)\cos(\varphi) + \sin(\psi)\sin(\varphi) & \sin(\psi)\sin(\theta)\cos(\varphi) - \cos(\psi)\sin(\varphi) & \cos(\theta)\cos(\varphi) \end{pmatrix}$$

où Ro = (Xo,Yo,Zo) et R = (Xe,Ye,Ze).

Après calcul, on obtient les équations E1 suivantes :

$$\dot{u}_a = -g\sin(\theta) + \Gamma_x + \overline{r}\,\overline{v}_a - \overline{q}\,\overline{w}_a - \cos(\psi)\cos(\theta)\dot{W}_x - \sin(\psi)\cos(\theta)\dot{W}_y$$

$$\dot{v}_a = g\sin(\theta)\sin(\varphi - \varphi^*) + QS_{ref}\overline{C}_y(V_a, \overline{\beta}_a) - u_a\overline{r} - \left(\cos(\psi)\sin(\theta)\sin(\varphi) - \sin(\psi)\cos(\varphi)\right)\dot{W}_x$$
$$- \left(\sin(\psi)\sin(\theta)\sin(\varphi) + \cos(\psi)\cos(\varphi)\right)\dot{W}_y$$

$$\dot{w}_a = g\cos(\theta)\cos(\varphi - \varphi^*) + QS_{ref}\overline{C}_z(V_a, \overline{\alpha}_a) + u_a\overline{q} - \left(\cos(\psi)\sin(\theta)\cos(\varphi) - \sin(\psi)\sin(\varphi)\right)\dot{W}_x$$
$$- \left(\sin(\psi)\sin(\theta)\cos(\varphi) + \cos(\psi)\sin(\varphi)\right)\dot{W}_y$$

De la même manière, les équations de moment de la mécanique du vol E2 s'écrivent dans le repère démodulé de $\varphi^*$ associé au projectile :

$$\dot{p} = 0$$

$$\dot{\overline{q}} = \frac{1}{I_y}\left(QS_{ref}l_{ref}\overline{C}_m(V_a,\overline{\alpha}_a) + M_q\overline{q} - p\overline{r}I_x\right)$$

$$\dot{\overline{r}} = \frac{1}{I_y}\left(QS_{ref}l_{ref}\overline{C}_n(V_a,\overline{\beta}_a) + M_q\overline{r} - p\overline{q}I_x\right)$$

où :

- $M_q = QS_{ref}l_{ref}C_{mq}$ avec $C_{mq}$ le coefficient d'amortissement en tangage, $Q$ est la pression dynamique, $l_{ref}$ est la longueur de référence et $S_{ref}$ est la surface de référence pour la définition de l'aérodynamique du projectile ;
- $\overline{C}_m$ et $\overline{C}_n$ sont les coefficients de moments aérodynamiques, fonction de la vitesse aérodynamique Va, de l'incidence $\overline{\alpha_a}$ et du dérapage $\overline{\beta_a}$ aérodynamiques démodulés $\varphi^*$ de respectivement en tangage et en lacet, au centre de gravité du1 projectile, dans le repère démodulé de $\varphi^*$ associé au projectile ; et
- $I_x$ et $I_y$ sont les inerties respectivement axiale et transverse.

Pour décrire la dynamique du projectile, on utilise les équations reliant le vecteur rotation instantanée du projectile (exprimé dans le repère démodulé de $\varphi^*$ associé au projectile), les angles d'Euler et leur dérivée.

La cinématique du projectile fournit les équations E3 suivantes :

$$\dot{\psi} = \left(\overline{q}\sin(\varphi - \varphi^*) + \overline{r}\cos(\varphi - \varphi^*)\right)/\cos(\theta)$$

$$\dot{\theta} = \overline{q}\cos(\varphi - \varphi^*) - \overline{r}\sin(\varphi - \varphi^*)$$

$$\dot{\varphi} = p + \left(\overline{q}\sin(\varphi - \varphi^*) + \overline{r}\cos(\varphi - \varphi^*)\right)\tan(\theta)$$

L'ensemble des équations E1, E2 et E3 décrit entièrement la dynamique du projectile et notamment l'action de la pesanteur.

Lorsque le vecteur de rotation instantanée et le vecteur de vitesse aérodynamique sont connus ou mesurés à un instant t, alors les équations E1, E2 et E3 permettent de prédire leurs évolutions.

Pour déterminer la vitesse cinématique du projectile, deux cas peuvent se présenter :

- soit la vitesse du vent est parfaitement connue (par exemple à l'aide d'une lecture dans une table), alors la vitesse cinématique du projectile peut être déduite de la vitesse aérodynamique $V_{cinématique} = V_{aérodynamique} + V_{vent}$ et les équations E1, E2 et E3 sont suffisantes pour estimer la vitesse cinématique du projectile ;
- soit la vitesse du vent n'est pas connue, alors il n'est pas possible d'estimer la vitesse cinématique du projectile. Néanmoins, sous l'hypothèse que la vitesse du vent est connue à un instant du vol (par exemple en début de vol), il devient possible d'estimer les variations du vent et donc d'estimer la vitesse du vent au cours du vol (la dérivée de la vitesse du vent intervenant directement dans les équations E1).

Pour estimer la vitesse du vent, on modélise le vent par un bruit blanc filtré par un filtre d'un ordre convenable, par exemple du deuxième ordre. A cet effet, on utilise le modèle de la dynamique du vent défini par les équations E4 suivantes :

$$\dot{W}_x = j_x$$

$$\dot{W}_y = j_y$$

$$\dot{j}_x = -2\xi\omega \dot{W}_x - \omega^2 W_x$$

$$\dot{j}_y = -2\xi\omega \dot{W}_y - \omega^2 W_y$$

où $\xi$ et $\omega$ sont des paramètres de réglage représentant la pulsation et l'amortissement du modèle du vent.

Ainsi, les équations E1, E2, E3 et E4 permettent de décrire la dynamique du projectile et du vent. L'ensemble de ces équations permet notamment d'estimer l'attitude du projectile ainsi que la vitesse aérodynamique et les variations de vitesse du vent.

Le filtre de Kalman étendu 7 possède alors 13 états. Le vecteur d'états est défini par

$$\hat{X} = \left[ \hat{u}_a, \hat{v}_a, \hat{w}_a, \hat{p}, \hat{q}, \hat{r}, \hat{\psi}, \hat{\theta}, \hat{\phi}, \hat{j}_x, \hat{j}_y, \hat{W}_x, \hat{W}_y \right]$$ et sa dynamique est décrite par les équations suivantes :

$$\dot{\hat{u}}_a = -g\sin(\hat{\theta}) + \Gamma_x + \hat{r}\hat{v}_a - \hat{q}\hat{w}_a - \cos(\hat{\psi})\cos(\hat{\theta})\hat{j}_x - \sin(\hat{\psi})\cos(\hat{\theta})\hat{j}_y$$

$$\dot{\hat{v}}_a = g\sin(\hat{\theta})\sin(\hat{\phi} - \varphi^*) + QS_{ref}\overline{C}_y(\hat{V}_a, \hat{\beta}_a) - \hat{u}_a\hat{r} - \left(\cos(\hat{\psi})\sin(\hat{\theta})\sin(\hat{\phi}) - \sin(\hat{\psi})\cos(\hat{\phi})\right)\hat{j}_x$$
$$- \left(\sin(\hat{\psi})\sin(\hat{\theta})\sin(\hat{\phi}) + \cos(\hat{\psi})\cos(\hat{\phi})\right)\hat{j}_y$$

$$\dot{\hat{w}}_a = g\cos(\hat{\theta})\cos(\hat{\phi} - \varphi^*) + QS_{ref}\overline{C}_z(\hat{V}_a, \hat{\alpha}_a) + \hat{u}_a\hat{q} - \left(\cos(\hat{\psi})\sin(\hat{\theta})\cos(\hat{\phi}) - \sin(\hat{\psi})\sin(\hat{\phi})\right)\hat{j}_x$$
$$- \left(\sin(\hat{\psi})\sin(\hat{\theta})\cos(\hat{\phi}) + \cos(\hat{\psi})\sin(\hat{\phi})\right)\hat{j}_y$$

$$\dot{\hat{p}} = 0$$

$$\dot{\hat{q}} = \frac{1}{I_y}\left( QS_{ref}l_{ref}\overline{C}_m(\hat{V}_a, \hat{\alpha}_a) + M_q\hat{q} - \hat{p}\hat{r}I_x \right)$$

$$\dot{\hat{r}} = \frac{1}{I_y}\left( QS_{ref}l_{ref}\overline{C}_n(\hat{V}_a, \hat{\beta}_a) + M_q\hat{r} - \hat{p}\hat{q}I_x \right)$$

$$\dot{\hat{\psi}} = \left( \hat{q}\sin(\hat{\phi} - \varphi^*) + \hat{r}\cos(\hat{\phi} - \varphi^*) \right) / \cos(\hat{\theta})$$

$$\dot{\hat{\theta}} = \hat{q}\cos(\hat{\phi} - \varphi^*) - \hat{r}\sin(\hat{\phi} - \varphi^*)$$

$$\dot{\hat{\varphi}} = \hat{p} + \left( \hat{\bar{q}} \sin(\hat{\varphi} - \varphi^*) + \hat{\bar{r}} \cos(\hat{\varphi} - \varphi^*) \right) \tan(\hat{\theta})$$

$$\dot{\hat{W}}_x = \hat{j}_x$$

$$\dot{\hat{W}}_y = \hat{j}_y$$

$$\dot{\hat{j}}_x = -2\xi\omega\hat{j}_x - \omega^2\hat{W}_x$$

$$\dot{\hat{j}}_y = -2\xi\omega\hat{j}_y - \omega^2\hat{W}_y$$

où $\dot{\varphi}^* = \hat{p}$ et la notation « ^ » désigne une estimation.

Afin de tenir compte avantageusement des imperfections des moyens de mesure 2, on rajoute 5 états complémentaires au vecteur d'états X du filtre de Kalman 7 :

- deux états $d_y$ et $d_z$ correspondant à l'excentrement des accéléromètres respectivement de tangage et de lacet ;
- deux états $c_q$ et $c_r$ correspondant à l'erreur de calage des gyromètres respectivement de tangage et de lacet ; et
- un état $f_p$ correspondant au facteur d'échelle du gyromètre de roulis.

Le vecteur d'états du filtre de Kalman étendu 7 comporte alors 18 états tels que

$$\hat{X} = \left[ \hat{u}_a, \hat{\bar{v}}_a, \hat{\bar{w}}_a, \hat{p}, \hat{\bar{q}}, \hat{\bar{r}}, \hat{\psi}, \hat{\theta}, \hat{\varphi}, \hat{j}_x, \hat{j}_y, \hat{W}_x, \hat{W}_y, \hat{f}_p, \hat{c}_q, \hat{c}_r, \hat{d}_y, \hat{d}_z \right].$$

La dynamique de ces cinq états est définie par les équations suivantes :

$$\dot{\hat{f}}_p = 0$$

$$\dot{\hat{c}}_q = 0$$

$$\dot{\hat{c}}_r = 0$$

$$\dot{\hat{d}}_y = 0$$

$$\dot{\hat{d}}_z = 0$$

Lors de la phase de vol guidé-piloté, le projectile est soumis à l'action des gouvernes canard en plus de la pesanteur. Le vecteur rotation instantanée du projectile a désormais deux contributions principales : l'action des gouvernes et l'action de la pesanteur.

Afin de tenir compte de l'action des gouvernes lors de la phase de vol guidé-piloté, on modifie les équations de moment de la mécanique du vol E2 (établies précédemment pour la phase de vol balistique).

Les coefficients des moments aérodynamiques peuvent être linéarisés de la façon suivante :

$$\overline{C}_m = \overline{C}_{m\alpha}\,\overline{\alpha} + \overline{C}_{m\eta}\,\overline{\eta}$$

$$\overline{C}_n = \overline{C}_{n\beta}\,\overline{\beta} + \overline{C}_{n\varsigma}\,\overline{\zeta}$$

où

- $\overline{\eta}$ et $\overline{\zeta}$ représentent les braquages respectivement en tangage et en lacet dans le repère démodulé de $\varphi^*$ associé au projectile ;
- $\overline{C}_{m\alpha}$ et $\overline{C}_{m\eta}$ sont les parties du coefficient du moment aérodynamique $\overline{C}_m$ dépendant respectivement de $\overline{\alpha}$ et $\overline{\eta}$ ;
- $\overline{C}_{n\beta}$ et $\overline{C}_{n\zeta}$ sont les parties du coefficient du moment aérodynamique $\overline{C}_n$ dépendant respectivement de $\overline{\beta}$ et $\overline{\zeta}$

On a par ailleurs les relations suivantes :

$$\hat{\overline{q}}_{BS} = \hat{\overline{q}} + \hat{c}_q\,\hat{p}\cos(\varphi^*) - \hat{c}_r\,\hat{p}\sin(\varphi^*)$$

$$\hat{\overline{r}}_{BS} = \hat{\overline{r}} + \hat{c}_q\,\hat{p}\sin(\varphi^*) + \hat{c}_r\,\hat{p}\cos(\varphi^*)$$

où $\hat{\overline{q}}_{BS}$ et $\hat{\overline{r}}_{BS}$ représentent une estimation des mesures effectuées par les gyromètres dans le repère démodulé de $\varphi^*$ associé au projectile.

Des relations précédentes, on détermine les variables $\hat{\overline{q}}_{BS}^*$ et $\hat{\overline{r}}_{BS}^*$ en retranchant la vitesse angulaire due à la gravité à $\hat{\overline{q}}_{BS}$ et $\hat{\overline{r}}_{BS}$. On obtient :

$$\hat{\overline{q}}_{BS}^* = \hat{\overline{q}} + \hat{c}_q\,\hat{p}\cos(\varphi^*) - \hat{c}_r\,\hat{p}\sin(\varphi^*) + g\cos(\theta)\cos(\varphi - \varphi^*)/\hat{V}$$

$$\hat{\overline{r}}_{BS}^* = \hat{\overline{r}} + \hat{c}_q\,\hat{p}\sin(\varphi^*) + \hat{c}_r\,\hat{p}\cos(\varphi^*) - g\cos(\theta)\sin(\varphi - \varphi^*)/\hat{V}$$

où $\hat{V}$ désigne le module de la vitesse cinématique estimée du projectile.

On obtient, après calcul, les équations de moment en tangage et en lacet E5 suivantes :

$$\dot{\hat{\overline{q}}} = \omega_c\left(\hat{I}_q - \hat{\overline{q}}_{BS}^*\right) + \frac{1}{I_y}\left(QS_{ref}l_{ref}(\overline{C}_{m\alpha}\,\hat{\overline{\alpha}}_a + C_{mq}\,\hat{\overline{q}}) - \hat{p}\,\hat{\overline{r}}\,I_x\right)$$

$$\dot{\hat{r}} = \omega_c\left(\hat{I}_r - \hat{\bar{r}}_{BS}^{*}\right) + \frac{1}{I_y}\left(QS_{ref}l_{ref}(\overline{C}_{n\beta}\,\hat{\bar{\beta}}_a + C_{mq}\,\hat{\bar{r}}) - \hat{p}\,\hat{q}\,I_x\right)$$

$$\dot{\hat{I}}_q = K_1\left(\overline{q}_{co} - \hat{\bar{q}}_{BS}^{*}\right)$$

$$\dot{\hat{I}}_r = K_1\left(\overline{r}_{co} - \hat{\bar{r}}_{BS}^{*}\right)$$

où le gain

$$K_1 = \frac{\omega_c}{n}\ \text{avec n} = 2.$$

Par ailleurs, on modifie l'équation $\dot{p} = 0$ établie pour la phase de vol balistique avantageusement par l'approximation suivante :

$$\dot{\hat{p}} = signe(p_{co} - \hat{p})\min\left(\omega_r(p_{co} - \hat{p}), \dot{p}_{max}\right)$$

où $\dot{p}_{max}$ représente la saturation en vitesse de roulis issue des moyens de pilotage 10 et $p_{co}$ désigne la vitesse de roulis commandée par les moyens de guidage 9.

Pour décrire le projectile lors de la phase de vol guidé-piloté, les deux états $I_q$ et $I_r$ sont introduits dans le vecteur d'états X du filtre de Kalman 7.

En outre, deux facteurs d'échelle $K_{C_m}$ et $K_{C_N}$ portant sur les coefficients de forces et de moments aérodynamiques sont également introduits dans le vecteur d'états X.

Ainsi, selon l'invention, pour la phase de vol piloté guidé, le filtre de Kalman étendu 7 possède 22 états tels que :

$$\hat{X} = \left[\hat{u}_a, \hat{\bar{v}}_a, \hat{\bar{w}}_a, \hat{p}, \hat{\bar{q}}, \hat{\bar{r}}, \hat{\psi}, \hat{\theta}, \hat{\phi}, \hat{j}_x, \hat{j}_y, \hat{W}_x, \hat{W}_y, \hat{f}_p, \hat{c}_q, \hat{c}_r, \hat{d}_y, \hat{d}_z, \hat{K}_{C_m}, \hat{K}_{C_N}, \hat{I}_q, \hat{I}_r\right]$$

La dynamique du filtre de Kalman 7 est décrite par les équations suivantes :

$$\dot{\hat{u}}_a = -g\sin(\hat{\theta}) + \Gamma_x + \hat{r}\,\hat{\overline{v}}_a - \hat{q}\,\hat{\overline{w}}_a - \cos(\hat{\psi})\cos(\hat{\theta})\hat{j}_x - \sin(\hat{\psi})\cos(\hat{\theta})\hat{j}_y$$

$$\dot{\hat{v}}_a = g\sin(\hat{\theta})\sin(\hat{\phi}-\phi^*) + QS_{ref}\,\overline{C}_y(\hat{V}_a,\hat{\overline{\beta}}_a) - \hat{u}_a\,\hat{\overline{r}} - \left(\cos(\hat{\psi})\sin(\hat{\theta})\sin(\hat{\phi}) - \sin(\hat{\psi})\cos(\hat{\phi})\right)\hat{j}_x$$
$$- \left(\sin(\hat{\psi})\sin(\hat{\theta})\sin(\hat{\phi}) + \cos(\hat{\psi})\cos(\hat{\phi})\right)\hat{j}_y$$

$$\dot{\hat{w}}_a = g\cos(\hat{\theta})\cos(\hat{\phi}-\phi^*) + QS_{ref}\,\overline{C}_z(\hat{V}_a,\hat{\overline{\alpha}}_a) + \hat{u}_a\,\hat{\overline{q}} - \left(\cos(\hat{\psi})\sin(\hat{\theta})\cos(\hat{\phi}) - \sin(\hat{\psi})\sin(\hat{\phi})\right)\hat{j}_x$$
$$- \left(\sin(\hat{\psi})\sin(\hat{\theta})\cos(\hat{\phi}) + \cos(\hat{\psi})\sin(\hat{\phi})\right)\hat{j}_y$$

$$\dot{\hat{p}} = signe(p_{co}-\hat{p})\min\left(\omega_r(p_{co}-\hat{p}),\dot{p}_{max}\right)$$

$$\dot{\hat{q}} = \omega_c\left(\hat{I}_q - \hat{\overline{q}}^*_{BS}\right) + \frac{1}{I_y}\left(QS_{ref}l_{ref}(\hat{K}_{C_m}\overline{C}_{m\alpha}\hat{\overline{\alpha}}_a + C_{mq}\hat{\overline{q}}) - \hat{p}\,\hat{\overline{r}}\,I_x\right)$$

$$\dot{\hat{r}} = \omega_c\left(\hat{I}_r - \hat{\overline{r}}^*_{BS}\right) + \frac{1}{I_y}\left(QS_{ref}l_{ref}(\hat{K}_{C_N}\overline{C}_{n\beta}\hat{\overline{\beta}}_a + C_{mq}\hat{\overline{r}}) - \hat{p}\,\hat{\overline{q}}\,I_x\right)$$

$$\dot{\hat{\psi}} = \left(\hat{\overline{q}}\sin(\hat{\phi}-\phi^*) + \hat{\overline{r}}\cos(\hat{\phi}-\phi^*)\right)/\cos(\hat{\theta})$$

$$\dot{\hat{\theta}} = \hat{\overline{q}}\cos(\hat{\phi}-\phi^*) - \hat{\overline{r}}\sin(\hat{\phi}-\phi^*)$$

$$\dot{\hat{\phi}} = \hat{p} + \left(\hat{\overline{q}}\sin(\hat{\phi}-\phi^*) + \hat{\overline{r}}\cos(\hat{\phi}-\phi^*)\right)\tan(\hat{\theta})$$

$$\dot{\hat{W}}_x = \hat{j}_x$$

$$\dot{\hat{W}}_y = \hat{j}_y$$

$$\dot{\hat{j}}_x = -2\xi\omega\hat{j}_x - \omega^2\hat{W}_x$$

$$\dot{\hat{j}}_y = -2\xi\omega\hat{j}_y - \omega^2\hat{W}_y$$

$$\dot{\hat{f}}_p = 0, \dot{\hat{c}}_q = 0, \dot{\hat{c}}_r = 0, \dot{\hat{d}}_y = 0, \dot{\hat{d}}_z = 0$$

$$\dot{\hat{K}}_{C_N} = 0$$

$$\dot{\hat{K}}_{C_m} = 0$$

$$\dot{\hat{I}}_q = K_1\left(\overline{q}_{co} - \hat{\overline{q}}^*_{BS}\right)$$

$$\dot{\hat{I}}_r = K_1\left(\overline{r}_{co} - \hat{\overline{r}}^*_{BS}\right)$$

Le filtre de Kalman à 22 états déterminé en considérant de la phase de vol guidé-piloté peut également être mis en oeuvre pour la phase de vol balistique.

Par ailleurs, les mesures des trois gyromètres et des trois accéléromètres des moyens de mesure 2 sont exploitées de la manière suivante par les moyens de recalage 13 de manière à recaler les états du filtre de Kalman.

On compare :

$$p_{mesurée} \quad \text{avec} \quad \hat{p} + \hat{f}_p \hat{p}$$

$$q_{mesurée} \cos(\varphi^*) - r_{mesurée} \sin(\varphi^*) \quad \text{avec} \quad \overset{\triangle}{q} + \hat{c}_q \hat{p} \cos(\varphi^*) - \hat{c}_r \hat{p} \sin(\varphi^*)$$

$$q_{mesurée} \sin(\varphi^*) + r_{mesurée} \cos(\varphi^*) \quad \text{avec} \quad \overset{\triangle}{r} + \hat{c}_q \hat{p} \sin(\varphi^*) + \hat{c}_r \hat{p} \cos(\varphi^*)$$

$$\Gamma^y_{mesurée} \cos(\varphi^*) - \Gamma^z_{mesurée} \sin(\varphi^*) \quad \text{avec} \quad QS_{ref} \hat{K}_{C_N} \overline{C}_y + \hat{d}_y \hat{p}^2 \cos(\varphi^*) - \hat{d}_z \hat{p}^2 \sin(\varphi^*)$$

$$\Gamma^y_{mesurée} \sin(\varphi^*) + \Gamma^z_{mesurée} \cos(\varphi^*) \quad \text{avec} \quad QS_{ref} \hat{K}_{C_N} \overline{C}_z + \hat{d}_y \hat{p}^2 \sin(\varphi^*) + \hat{d}_z \hat{p}^2 \cos(\varphi^*)$$

Sur la figure 4, on a représenté un exemple de schéma synoptique des moyens de pilotage équivalents 11 du filtre de Kalman 7.

Les moyens de pilotage équivalents 11 comportent :

- des moyens de démodulation 14, qui reçoivent les ordres de guidage $q_{co}$ et $r_{co}$ dans le repère lié au projectile (liaison L4). Les moyens de démodulation 14 sont aptes à effectuer un changement de repère des ordres de guidage $q_{co}$ et $r_{co}$ du repère lié au projectile au repère démodulé de $\varphi^*$ associé au projectile et à délivrer en sortie, par la liaison L9, les ordres de guidage démodulés de $\varphi^*$ $\overline{q}_{co}$ et $\overline{r}_{co}$ ;

- un premier comparateur 15 qui reçoit les ordres de guidage démodulés de $\varphi^*$ $\overline{q}_{co}$ et $\overline{r}_{co}$ (liaison L9) ainsi que les variables $\overset{\triangle}{q}{}^*_{BS}$ et $\overset{\triangle}{r}{}^*_{BS}$ transmises par les moyens de recalage 13 (liaison L5). Le premier comparateur 15 est apte à délivrer en sortie, par la liaison L10, un signal représentatif de la différence $\overline{q}_{co} - \overset{\triangle}{q}{}^*_{BS}$ et de la différence $\overline{r}_{co} - \overset{\triangle}{r}{}^*_{BS}$ ;

- le premier gain K1, référencé 16, relié à la sortie du comparateur 15. Le premier gain 16 est apte à délivrer en sortie, par la liaison L11, un signal représentatif de $K_1 \left( \overline{q}_{co} - \overset{\triangle}{q}{}^*_{BS} \right)$ et $K_1 \left( \overline{r}_{co} - \overset{\triangle}{r}{}^*_{BS} \right)$ ;

- un intégrateur 17, relié à la sortie du gain 16. L'intégrateur 17 est apte à délivrer en sortie, par la liaison L12, un signal représentatif de l'intégration $K_1 \int \left( \overline{q}_{co} - \overset{\triangle}{q}{}^*_{BS} \right) dt$ et de l'intégration $K_1 \int \left( \overline{r}_{co} - \overset{\triangle}{r}{}^*_{BS} \right) dt$ ;

- un second comparateur 18, relié à la sortie de l'intégrateur 17 et qui reçoit les variables $\overset{\triangle}{q}{}^*_{BS}$ et $\overset{\triangle}{r}{}^*_{BS}$ transmises par les moyens de recalage 13 (liaison L5). Le second comparateur 18 est apte à délivrer en sortie, par la liaison L13, un signal représentatif de la différence $K_1 \int \left( \overline{q}_{co} - \overset{\triangle}{q}{}^*_{BS} \right) dt - \overset{\triangle}{q}{}^*_{BS}$ et de la différence $K_1 \int \left( \overline{r}_{co} - \overset{\triangle}{r}{}^*_{BS} \right) dt - \overset{\triangle}{r}{}^*_{BS}$ ;

- un second gain K2, référencé 19, relié à la sortie du second comparateur 18. Le second gain 19 est apte à délivrer en sortie, par la liaison L14, un signal représentatif de $K_2\left(K_1\int\left(\overline{q}_{co}-\hat{\overline{q}}_{BS}^*\right)dt-\hat{\overline{q}}_{BS}^*\right)$ et

$$K_2\left(K_1\int\left(\overline{r}_{co}-\hat{\overline{r}}_{BS}^*\right)dt-\hat{\overline{r}}_{BS}^*\right); \text{ et}$$

- des moyens de modulation 20, reliés à la sortie du gain 19, aptes à délivrer à leur sortie (liaison L7) des ordres de commande $\hat{\eta}_{co}$ et $\hat{\zeta}_{co}$ équivalents aux ordres de commande des moyens de pilotage 10.

Ainsi, les ordres de commande équivalents (avant modulation par les moyens de modulation 20) sont définis par les équations suivantes :

$$\hat{\overline{\eta}}_{co} = K_2\left(K_1\int\left(\overline{q}_{co}-\hat{\overline{q}}_{BS}^*\right)dt-\hat{\overline{q}}_{BS}^*\right)$$

$$\hat{\overline{\zeta}}_{co} = K_2\left(K_1\int\left(\overline{r}_{co}-\hat{\overline{r}}_{BS}^*\right)dt-\hat{\overline{r}}_{BS}^*\right)$$

Sur la figure 5, on a représenté un exemple de schéma synoptique des moyens de navigation 8 du calculateur de guidage 3 conforme au mode de mise en oeuvre de l'invention.

Les moyens de navigation 8 comportent :

- des premiers moyens d'intégration 21, qui reçoivent les mesures obtenues par lesdits moyens de mesure 2 (liaison L1). Les premiers moyens d'intégration 21 sont aptes à délivrer en sortie, par la liaison L15, l'attitude et la position du projectile ;
- des deuxièmes moyens d'intégration 22, qui reçoivent des mesures obtenues par les accéléromètres des moyens de mesure 2 (liaison L1) et l'attitude estimée par le filtre de Kalman étendu 7 (liaison L5). Les deuxièmes moyens d'intégration 22 sont aptes à délivrer en sortie, par la liaison L16, l'attitude et la position du projectile ;
- des troisièmes moyens d'intégration 23, qui reçoivent les estimations de la vitesse aérodynamique et des variations de la vitesse du vent réalisées par le filtre de Kalman 7 (liaison L5). Les troisièmes moyens d'intégration sont aptes à délivrer en sortie, par la liaison L17, l'attitude et la position du projectile ;
- des quatrièmes moyens d'intégration 24, qui reçoivent la trajectoire de référence (liaison L2). Ils sont aptes à délivrer en sortie, par la liaison L18, l'attitude et la position du projectile ;
- des moyens de supervision 25, qui reçoivent l'attitude et la position du projectile déterminées par les premiers 21, deuxièmes 22, troisièmes 23 et quatrièmes 24 moyens d'intégration (les liaisons respectivement L15, L16, L17 et L18). Les moyens de supervision 25 sont aptes à sélectionner, pour chaque phase du vol du projectile, la position et l'attitude déterminées correspondant à une navigation optimale du projectile en fonction de critères tels que le facteur de charge du projectile ou le temps écoulé. Ils peuvent ainsi délivrer en sortie, par la liaison L19, la position et l'attitude du projectile déterminées par les moyens d'intégration sélectionnés pour chaque phase du vol. Ils sont également aptes à rendre les moyens de guidage 9 opérationnels ; et
- des moyens de transfert 26, qui reçoivent la position et l'attitude du projectile déterminées (liaison L19) par les moyens d'intégration sélectionnées.

## Revendications

1. Système de guidage d'un projectile équipé d'au moins un actionneur de pilotage (5) et comportant des moyens de mesure de paramètres physiques (2), un calculateur de guidage (3) et des moyens de commande (4) dudit actionneur de pilotage (5), ledit projectile devant suivre une trajectoire de référence dans les premiers instants de vol et ledit calculateur de guidage (3) comportant :

- des moyens de navigation (8) pour déterminer l'attitude et la position du projectile en vol ;
- des moyens de guidage (9) pour élaborer des ordres de guidage à partir de l'attitude, de la position et de la position du but déterminées par lesdits moyens de navigation (8) ; et
- des moyens de pilotage (10) pour établir des ordres de commande, destinés auxdits moyens de commande (4), à partir desdits ordres de guidage,

**caractérisé en ce que** ledit calculateur de guidage (3) comporte en outre des moyens d'estimation (7) aptes à estimer, au cours du vol, l'attitude et la vitesse aérodynamique du projectile, ainsi que les variations de la vitesse du vent, à partir desdits ordres de guidage, de ladite trajectoire de référence et desdites mesures obtenues par lesdits moyens de mesure (2), en utilisant un modèle de comportement dynamique du projectile et un modèle de la dynamique du vent.

2. Système selon la revendication 1,
**caractérisé en ce que** lesdits moyens d'estimation (7) comportent des moyens de pilotage équivalents (11) pour déterminer, à partir desdits ordres de guidage élaborés par lesdits moyens de guidage (9), des ordres de commande équivalents auxdits ordres de commande établis par lesdits moyens de pilotage (10).

3. Système selon la revendication 2,
**caractérisé en ce que** lesdits moyens de pilotage équivalents (11) comportent :

- un premier comparateur (14), relié à la sortie desdits moyens d'estimation (7) et à la sortie desdits moyens de guidage (9) ;
- un premier gain (16), relié à la sortie dudit premier comparateur (14) ;
- un intégrateur (17), relié à la sortie dudit premier gain (16) ;
- un second comparateur (18), relié à la sortie dudit intégrateur (17) et à la sortie desdits moyens d'estimation (7) ; et
- un second gain (19), relié à la sortie dudit second comparateur (17).

4. Système selon l'une quelconque des revendications 1 à 3,
**caractérisé en ce que** le vent est modélisé par un bruit blanc filtré au sein dudit modèle de la dynamique du vent.

5. Système selon l'une quelconque des revendications 1 à 4,
**caractérisé en ce que** lesdits moyens d'estimation (7) sont constitués par un filtre de Kalman étendu.

6. Système selon l'une quelconque des revendications 1 à 5,
**caractérisé :**

- **en ce que** lesdits moyens de navigation (8) comportent au moins :

  ▪ des premiers moyens d'intégration (21), reliés auxdits moyens de mesure (2), aptes à déterminer l'attitude et la position du projectile à partir de mesures obtenues par lesdits moyens de mesure (2) ;
  ▪ des deuxièmes moyens d'intégration (22), reliés auxdits moyens de mesure (2) et auxdits moyens d'estimation (7), aptes à déterminer l'attitude et la position du projectile à partir des mesure desdits moyens de mesure (2) et de l'attitude estimée par lesdits moyens d'estimation (7) ;
  ▪ des troisièmes moyens d'intégration (23), reliés auxdits moyens d'estimation (7), aptes à déterminer l'attitude et la position du projectile à partir de l'estimation de l'attitude et de la vitesse aérodynamique du projectile ainsi que des variations de la vitesse du vent ; et
  ▪ des quatrièmes moyens d'intégration (24) aptes à déterminer l'attitude et la position du projectile à partir de ladite trajectoire de référence ;

- et **en ce que** lesdits moyens de navigation (8) comportent également des moyens de supervision (25), reliés auxdits premiers, deuxièmes, troisièmes et quatrièmes moyens d'intégration, pour sélectionner, en fonction d'un critère de sélection, un desdits moyens d'intégration, de sorte que lesdits moyens de navigation (8) soient aptes à délivrer l'attitude et la position du projectile déterminées par lesdits moyens d'intégration sélectionnés.

**7.** Système selon l'une quelconque des revendications 1 à 6,
**caractérisé en ce que** lesdits moyens de mesure (2) comportent trois gyromètres, trois accéléromètres et deux magnétomètres.

**8.** Projectile,
**caractérisé en ce qu'**il comporte un système de guidage (1) tel que spécifié sous l'une des revendications 1 à 7.

**Patentansprüche**

**1.** System zur Führung von einem Projektil, das mit mindestens einem Lenkaktuator (5) ausgestattet ist, und Messmittel für physikalische Parameter (2), einen Führungsrechner (3) und Steuermittel (4) des Lenkaktuators (5) umfasst, wobei das Projektil einer Referenzbahn in den ersten Augenblicken des Flugs folgen soll, und wobei der Führungsrechner (3) umfasst:

- Navigationsmittel (8), um die Höhe und die Position des Projektils im Flug zu bestimmen;
- Führungsmittel (9), um Führungsbefehle ausgehend von der Höhe, der Position und der Position des Ziels, welche durch die Navigationsmittel (8) bestimmt sind, auszuarbeiten; und
- Lenkmittel (10), um Steuerbefehle, die für die Steuermittel (4) bestimmt sind, ausgehend von den Führungsbefehlen zu erstellen,

**dadurch gekennzeichnet, dass** der Führungsrechner (3) ferner Schätzmittel (7) umfasst, die eingerichtet sind, während des Fluges die Höhe und die aerodynamische Geschwindigkeit des Projektils sowie Schwankungen der Windgeschwindigkeit ausgehend von den Führungsbefehlen, der Referenzbahn und der Messungen, die durch die Messmittel (2) erhalten wurden, unter Verwendung eines Modells des dynamischen Verhaltens des Projektils und eines Modells der Dynamik des Winds abschätzen zu können.

**2.** System nach Anspruch 1, **dadurch gekennzeichnet, dass** die Schätzmittel (7) äquivalente Lenkmittel (11) umfassen, um ausgehend von den Führungsbefehlen, die von den Führungsmitteln (9) ausgearbeitet wurden, Steuerbefehle zu bestimmen, die mit den Steuerbefehlen äquivalent sind, die von den Lenkmitteln (10) festgelegt sind.

**3.** System nach Anspruch 2, **dadurch gekennzeichnet, dass** die äquivalenten Lenkmittel (11) umfassen:

- einen ersten Komparator (14), der mit dem Ausgang der Schätzmittel (7) und mit dem Ausgang der Führungsmittel (9) verbunden ist;
- einen ersten Verstärker (16), der mit dem Ausgang des ersten Komparators (14) verbunden ist;
- einen Integrator (17), der mit dem Ausgang des ersten Verstärkers (16) verbunden ist;
- einen zweiten Komparator (18), der mit dem Ausgang des Integrators (17) und mit dem Ausgang der Schätzmittel (7) verbunden ist; und
- einen zweiten Verstärker (19), der mit dem Ausgang des zweiten Komparators (17) verbunden ist.

**4.** System nach einem der Ansprüche 1 bis 3, **dadurch gekennzeichnet, dass** der Wind durch ein gefiltertes weißes Rauschen innerhalb des Modells der Dynamik des Winds modelliert wird.

**5.** System nach einem der Ansprüche 1 bis 4, **dadurch gekennzeichnet, dass** die Schätzmittel (7) durch einen erweiterten Kalman-Filter gebildet sind.

**6.** System nach einem der Ansprüche 1 bis 5, **dadurch gekennzeichnet:**

- **dass** die Navigationsmittel (8) zumindest umfassen:

▪ erste Integrationsmittel (21), die mit dem Messmitteln (2) verbunden sind, die eingerichtet sind, die Höhe und die Position des Projektils ausgehend von den Messungen zu bestimmen, die von den Messmitteln (2) erhalten wurden;
▪ zweite Integrationsmittel (22), die mit den Messmitteln (2) und den Schätzmitteln (7) verbunden sind, die eingerichtet sind, die Höhe und die Position des Projektils ausgehend von den Messungen des Messmittels (2) und der Höhe zu bestimmen, die von den Schätzmitteln (7) geschätzt wurde;
▪ dritte Integrationsmittel (23), die mit den Schätzmitteln (7) verbunden sind, die eingerichtet sind, die Höhe und die Position des Projektils ausgehend von der Schätzung der Höhe und der aerodynamischen Geschwindigkeit des Projektils sowie den Schwankungen der Windgeschwindigkeit zu bestimmen; und

■ vierte Integrationsmittel (24), die eingerichtet sind, die Höhe und die Position des Projektils ausgehend von der Referenzbahn zu bestimmen;

- und **dass** die Navigationsmittel (8) auch Überwachungsmittel (25) umfassen, die mit den ersten, zweiten, dritten und vierten Integrationsmitteln verbunden sind, um als Funktion eines Auswahlkriteriums eines der Integrationsmittel auszuwählen, so dass die Navigationsmittel (8) eingerichtet sind, die Höhe und die Position des Projektils zu liefern, die durch die ausgewählten Integrationsmittel bestimmt sind.

7. System nach einem der Ansprüche 1 bis 6, **dadurch gekennzeichnet, dass** die Messmittel (2) drei Gyrometer, drei Beschleunigungsmesser und zwei Magnetometer umfassen.

8. Projektil, **dadurch gekennzeichnet, dass** es ein Führungssystem (1) wie in einem der Ansprüche 1 bis 7 angegeben umfasst.


**Claims**

1. A guiding system for a projectile provided with at least one piloting actuator (5) and comprising measuring means (2) for physical parameters, a guidance computer (3) and controlling means (4) for said piloting actuator (5), said projectile having to follow a reference trajectory in the first flight instants and said guidance computer (3) comprising:

   - navigational means (8) for determining the attitude and the position of the projectile upon a flight;
   - guidance means (9) for providing guidance orders from the attitude, the position and the goal position determined by said navigational means (8); and
   - piloting means (10) for establishing control orders, intended for said control means (4), from said guidance orders,

   **characterized in that** said guidance computer (3) further comprises estimation means (7) able to estimate, in the course of flight, the attitude and the aerodynamic speed of the projectile, as well as the variations of the speed of the wind, from said guidance orders, said reference trajectory and said measurements obtained by said measurement means (2), using a model of the dynamic behaviour of the projectile and a model of the wind dynamics.

2. The system according to claim 1,
   **characterized in that** said estimation means (7) comprise equivalent piloting means (11) for determining, from said guidance orders provided by said guidance means (9), control orders equivalent to said control orders established by said piloting means (10).

3. The system according to claim 2,
   **characterized in that** said equivalent piloting means (11) comprise:

   - a first comparator (14), connected to the outlet of said estimation means (7) and to the outlet of said guidance means (9);
   - a first gain (16), connected to the outlet of said first comparator (14);
   - an integrator (17), connected to the outlet of said first gain (16);
   - a second comparator (18), connected to the outlet of said integrator (17) and to the outlet of said estimation means (7); and
   - a second gain (19), connected to the outlet of said second comparator (17).

4. The system according to any one of claims 1 to 3,
   **characterized in that** the wind is modelled by a white noise filtered within said model of the wind dynamics.

5. The system according to any one of claims 1 to 4,
   **characterized in that** said estimation means (7) comprise an extended Kalman filter.

6. The system according to any one of claims 1 to 5,
   **characterized in that**:

- said navigational means (8) comprise at least:

  - first integration means (21), connected to said measurement means (2), able to determine the attitude and the position of the projectile from measurements obtained by said measurement means (2);
  - second integration means (22), connected to said measurement means (2) and to said estimation means (7), able to determine the attitude and the position of the projectile from measurements obtained by said measurement means (2) and the attitude estimated by said estimation means (7);
  - third integration means (23), connected to said estimation means (7), able to determine the attitude and the position of the projectile from the estimation of the attitude and the aerodynamic speed of the projectile as well as from variations of the speed of the wind; and
  - fourth integration means (24) able to determine the attitude and the position of the projectile from said reference trajectory;

  - and said navigational means (8) further comprise supervision means (25), connected to said first, second, third and fourth integration means, for selecting, based on a selection criterion, one of said integration means, so that said navigational means (8) are able to deliver the attitude and the position of the projectile determined by said selected integration means.

7. The system according to any one of claims 1 to 6, **characterized in that** said measurement means (2) comprise three gyrometers, three accelerometers and two magnetometers.

8. A projectile
   **characterized in that** it comprises a guiding system (1) such as specified in any one of claims 1 to 7.

Fig. 1

Fig. 2

Fig. 3

Fig. 5

Fig. 4

EP 2 169 508 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6573486 B